## Europäisches Patentamt
## European Patent Office
## Office européen des brevets

(19)

(11) Publication number: **0 227 298**
**A2**

(12) # EUROPEAN PATENT APPLICATION

(21) Application number: **86308999.1**

(22) Date of filing: **18.11.86**

(51) Int. Cl.⁴: **G 01 C 15/00**

(30) Priority: **29.11.85 GB 8529491**

(43) Date of publication of application:
**01.07.87 Bulletin 87/27**

(84) Designated Contracting States:
**AT BE CH DE ES FR GR IT LI LU NL SE**

(71) Applicant: **LKB INTERNATIONAL LIMITED**
**Clarendon House 37-41 Bridge Street**
**Northampton NN1 1NS(GB)**

(72) Inventor: **Wild, Alan Alcock**
**Cross Farm Old Road**
**Walgrave Northants. NN6 9QW(GB)**

(74) Representative: **Wain, Christopher Paul et al,**
**A.A. THORNTON & CO. Northumberland House 303-306**
**High Holborn**
**London WC1V 7LE(GB)**

(54) **Surveying method.**

(57) A method of surveying a surface comprises projecting a spot of light preferably coherent light onto a point of the surface where it is desired to determine a coordinate. The spot of light is projected from a location remote from the point. Two measuring instruments are located at known or determinable coordinates remote from said point. Each of the instruments is aligned with the spot, and the horizontal and vertical angles of the aligned instrument noted. The desired coordinate of the point can then be computed from the noted angles.

EP 0 227 298 A2

- 1 -

SURVEYING METHOD

The present invention relates to a method of surveying and more particularly, but not exclusively, it relates to a method of surveying in which there need be no physical contact with the area being surveyed. The invention finds particular utility in surveying of road surfaces, which term shall be taken to include motorway surfaces.

The invention will be described with particular reference to its use in surveying a road surface, although it is not limited to such utilisation. For some time now, it has been found necessary to repair and resurface road surfaces which have been crumbling under the increasingly heavy volume of traffic using such surfaces. Before the resurfacing can be undertaken, the proposed surface needs to be designed and the volume of material required needs to be estimated. This can only be done by determining precise and accurate levels of the existing surface, generally along cross-sections at set intervals.

Hitherto, this heighting process has been carried out by using first or second order surveyor's spirit levels with parallel plate micrometers and invar staves. This method is extremely accurate, in fact more so than is necessary for road engineers purposes. The method, however, suffers from the great disadvantage that it is necessary for the stave to be held by an operator. In the case of surveying an existing roadway, it is unacceptably dangerous for this to be done without closing off at least part of the road to traffic.

Because of the high traffic speeds on motorways, and because of the necessary safety requirements, it is often the case that many miles of motorway, either one or two lanes, need to be coned off in order for two surveyors to go about their business. In view of the high cost of coning off motorways, and more importantly because of the disruption such restrictions cause to traffic flow, it is usually the practice to carry out such surveys immediately before the resurfacing work on that section is carried out. The speed with which the surveying needs to be done may possibly lead to errors in some of the figures which can lead to inaccuracies in the amount of material required.

It is an object of the present invention to provide a method of surveying which will overcome the above disadvantages and which, when applied to road surveys will enable the survey to be carried out without interruption of the traffic flow.

According to the present invention there is provided a method of surveying a surface comprising the steps of projecting a spot of light onto a point of said surface at least one coordinate of which one point it is desired to determine, the spot of light being projected from a location remote from said point, providing two measuring instruments at locations of which the coordinates are known or determinable and which are remote from said point, aligning each of the instruments with the spot, noting the horizontal and vertical angles of the aligned instrument and computing from the noted angles the desired at least one coordinate of the point.

Preferably the light is coherent light, viz a laser beam, ideally of low power.

The surface to be surveyed may be a road or other motorway, the desired coordinate of each point being its height with respect to a datum level, and the remote locations of the source of light and the measuring instruments being clear of the road.

Advantageously, the measuring instruments are theodolites, preferably electronic theodolites If this is the case, the angles of the aligned electronic theodolite may be noted automatically by an associated data logging instrument for subsequent computing.

The method may also comprise a preliminary step of determining the three dimensional coordinates of each measuring instrument location either directly from a fixed datum point or from a preceding measuring instrument location, the coordinates of which have been determined.

A further additional step may be provided in which chainage markings are made at regular spaced intervals along an edge of the road.

The distance between the locations of the two measuring instruments may be up to 100 metres, preferably in the region of 75 metres. The distance between chainage markings may vary but preferably is in the region of 5-10 metres.

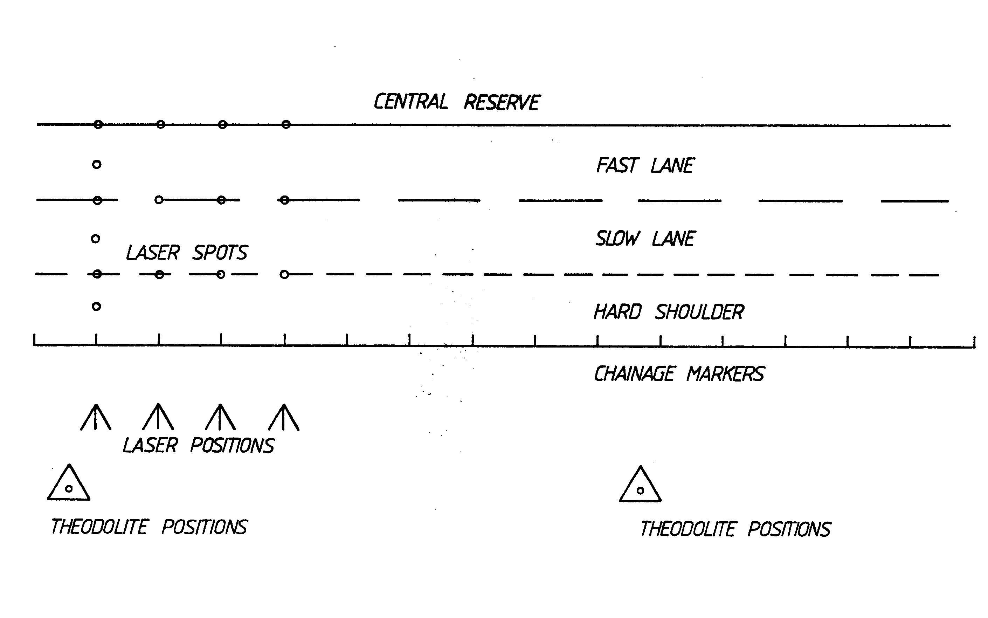

An embodiment of the present invention will now be more particularly described by way of example and with reference to the accompanying drawing, the single figure of which shows diagramatically in plan view the arrangement for surveying a carriageway of a motorway.

The preferred instruments for carrying out a method embodying the invention are two electronic theodolites, a laser projector and optionally an infrared distancer, together with a solid state data recorder connected with each electronic theodolite. Examples of the preferred equipment are Wild T2000 Theomat informatic theodolites, Wild Distomat D14 infrared distancers, Wild GRE3 solid state data recorders

and a Melles Griot helium-neon laser of 10 milliwatt maximum output (Class IIIB). The laser is fitted with a 50% attenuating lens in front of the objective lens. The laser beam emitted is of such low intensity that there is no danger to occupants of vehicles passing at a speed of 30 mph within a distance of 3 metres from the laser source.

Initially, permanent bench marks are established along the edge of each carriageway of the road. Precise angles and distances can be measured between these bench marks to an accuracy of 0.001 metres using the above theodolite in conjunction with the above infrared distancer. By this means, the three dimensional coordinates for each bench mark may be established on a common grid along the stretch of road to be surveyed. The positions of the bench marks are off the roadway, either to the rear of the hardshoulder or on the grass verge. In cases where the roadway passes through a cutting, the locations may be on the sides or even at the top of the cutting. The distance between bench marks may vary but it has been found that the preferred distance is 75 metres.

Typical surveys require carriageway centre and edge levels to be taken at cross-sections spaced at 10 metre intervals. In order to produce such figures efficiently chainage markers may be set up at 10 metre intervals along the edge of the roadway.

Two electronic theodolites each coupled to a respective data recorder are then set up at two adjacent bench marks and a laser projector is set up off the roadway but between the two theodolites. It is preferably aligned with a chainage mark and mounted on a tripod. The laser then projects a spot of laser light to the desired point on the road surface and the theodolites, referenced to each other, are aligned with the spot. Horizontal and vertical angles are then automatically recorded by the data recorders. In order to aid the task of the operators of the theodolites and/or to expedite the process, a 12v search light is mounted to the laser source and adapted to emit a beam of white light parallel to the laser beam. The laser spot can thus easily be identified.

The process is repeated by realigning the laser projector to give a spot at the next desired location. Once the entire width of the carriageway has been surveyed, the laser may be moved to the next chainage mark and the process repeated.

Alternatively, the laser projector may be pivotable so that a number of chainage marks can be covered without moving the laser projector.

The data stored in the recorders may be fed to a computer to determine the three dimensional coordinates of each point of measurement of the road surface to an accuracy of $\pm$ 0.003 metres. The coordinates can, if so desired, be given to an automatic plotter to draw a map of the road surface or they may be transformed to a digital form for automatic input into CAD systems.

The method can be carried out without any restriction of the roadway and under any traffic conditions other than complete stoppage. The method is sufficiently quick to operate that a reading can be taken in one or two gaps between the vehicles travelling at average speed along the motorway. It is preferred that the method is operated at night, since at that time the laser beam spot is more clearly defined and the traffic is generally reduced which gives less interruptions in the aligning process. The method can be operated in all weathers except settled snow, which effectively changes the surface height of the road or, of course, fog or heavy rain which may effect visibility.

CLAIMS:

1.       A method of surveying a surface using alignable measuring instruments, characterised in that the method comprises the steps of projecting a spot of light onto a point of said surface at least one coordinate of which one point it is desired to determine, the spot of light being projected from a location remote from said point, providing two said measuring instruments at locations of which the coordinates are known or determinable and which are remote from said point, aligning each of the instruments with the spot, noting the horizontal and vertical angles of the aligned instrument and computing from the noted angles the desired at least one coordinate of the point.

2.       A method as claimed in claim 1, characterised in that the light is coherent light, viz  a laser beam, preferably of low power.

3.       A method as claimed in claim 2, characterised in that the laser beam is generated by a helium neon laser of low output, further provided with an attenuating lens.

4.       A method as claimed in any one of the preceding claims, characterised in that the surface to be surveyed is a roadway, the desired coordinate of each point being its height with respect to a datum level, and the remote locations of the source of light and the measuring instruments are clear of the road.

5.       A method as claimed in any one of the preceding claims, characterised in that the measuring instruments are electronic theodolites.

0227298

6.     A method as claimed in claim 5, characterised in that the angles of the aligned electronic theodolite are noted automatically by an associated data logging instrument for subsequent computing.

7.     A method as claimed in any one of the preceding claims, further characterised by a preliminary step of determining the three dimensional coordinates of each measuring instrument location either directly from a fixed datum point or from a preceding measuring instrument location, the coordinates of which have been determined.

8.     A method as claimed in any one of the preceding claims, characterised in that the distance between the locations of the two measuring instruments is up to 100 metres, preferably in the region of 75 metres.

9.     A method as claimed in any one of the preceding claims, further characterised by an additional step of making chainage markings at regular spaced intervals along an edge of the surface to be surveyed.

10.     A method as claimed in claim 9, characterised in that the distance between chainage markings is in the region of 5-10 metres.

CENTRAL RESERVE

FAST LANE

SLOW LANE

LASER SPOTS

HARD SHOULDER

CHAINAGE MARKERS

LASER POSITIONS

THEODOLITE POSITIONS

THEODOLITE POSITIONS